# EUROPEAN PATENT APPLICATION

(11) **EP 3 447 238 A1**
(43) Date of publication of application: **27.02.2019**
(21) Application number: 18198030.1
(22) Date of filing: 06.03.2014
(51) Int. Cl.: E21B 43/17, E21B 43/26, F04D 15/00

(54) **FRACTURING SYSTEMS AND METHODS FOR A WELLBORE**

(30) Priority: 07.03.2013 US 201361774237 P; 15.03.2013 US 201361790942 P; 02.04.2013 US 201361807699 P; 27.08.2013 US 201361870350 P; 10.10.2013 US 201361889187 P; 12.12.2013 US 201361915093 P
(62) Divisional of application: 14759998.9
(71) Applicant: Prostim Labs, LLC, Houston, TX 77024 (US)
(72) Inventor: LESTZ, Robert, Houston,, TX Texas 77024 (US); THRASH, John, Houston,, TX Texas 77024 (US); BYRD, Audis, Houston,, TX Texas 77024 (US); JUNKINS, Jim, Houston,, TX Texas 77024 (US)
(74) Representative: J A Kemp

(57) **Abstract**

Systems, units, and methods usable to stimulate a formation include a first supply subsystem adapted to provide a first medium to the formation and a pressure subsystem that includes a pump in communication with the first medium to pressurize the first medium to a pressure sufficient to stimulate the formation. Usable media can include non-gelled liquid alkanes, halogenated hydrocarbons, foamed hydrocarbons, propylene carbonate, a fludized solid proppant material that behaves as a liquid under threshold conditions, or a liquid material adapted to solidify under threshold conditions. A proppant can be supplied in addition to the first medium when performing fracturing operations. Usable proppant can include materials having a size or density adapted to facilitate buoyancy, hollow materials, composite materials, porous materials, or crystalline materials.

## Description

### CROSS-REFERNCE TO RELATED APPLICATIONS

The present application claims priority to the United States Provisional Application for patent, having the Application Serial Number 61/774,237, filed March 7, 2013; the United States Provisional Application for patent, having the Application Serial Number 61/790,742, filed March 15, 2013; the United States Provisional Application for patent, having the Application Serial Number 61/807,699, filed April 2, 2013; the United States Provisional Application for patent, having the Application Serial Number 61/870,350, filed August 27, 2013; the United States Provisional Application for patent, having the Application Serial Number 61/889,187 filed October 10, 2013; and the United States Provisional Application for patent, having the Application Serial Number 61/915,093, filed December 12, 2013. Each of the above-referenced applications are incorporated by reference herein in their entirety.

### FIELD

Embodiments usable within the scope of the present disclosure relate, generally, to systems, methods, devices, and compositions usable within a wellbore, and more specifically, to systems and methods for fracturing a subterranean formation to stimulate production (e.g., of hydrocarbons) therefrom.

### BACKGROUND

To stimulate and/or increase the production of hydrocarbons from a well, a process known as fracturing (colloquially referred to as "fracing") is performed. In brief summary, a pressurized fluid - often water - is pumped into a producing region of a formation at a pressure sufficient to create fractures in the formation, thereby enabling hydrocarbons to flow from the formation with less impedance. Solid matter, such as sand, ceramic beads, and/or similar particulate-type materials, can be mixed with the fracturing fluid, this material generally remaining within the fractures after the fractures are formed. The solid material, known as proppant, serves to prevent the fractures from closing and/or significantly reducing in size following the fracturing operation, e.g., by "propping" the fractures in an open position The presence of open, propped fractures provides a beneficial contrast between the permeability in the fracture versus that in the adjacent subterranean reservoir. This contrast provides for a highly conductive pathway for reservoir fluids to travel, thus enhancing the productivity of the well.

Fracturing using aqueous fluids is often undesirable due to the negative effects of water on the formation. For example, clays and other formation components can swell when exposed to water, while salts and other formation components may dissolve, such that exposure to a significant quantity of water can destabilize a formation. Use of water and other aqueous fluids also generates issues regarding disposal. Specifically, aqueous fracturing fluid recovered from a well (e.g., subsequent to a fracturing operation) contains various wellbore fluids and other chemicals (e.g., additives to facilitate fracturing using the fluid), and as such, the recovered fracturing fluid must be collected and stored at the surface and disposed of in an environmentally acceptable manner, as required by numerous regulations. Such a process can add considerable time and expense to a fracturing operation, especially when considering the enormous quantities of liquid required to perform the operation.

Non-aqueous fracturing fluids have been used as an alternative, one such successful class including hydrocarbon-based fluids (e.g., crude/refined oils, methanol, diesel, condensate, liquid petroleum glass (LPG) and/or other aliphatic or aromatic compounds). Hydrocarbon-based fracturing fluids are inherently compatible with most reservoir formations, being generally non-damaging to formations while creating acceptable fracture geometry. However, due to the flammability of hydrocarbon-based fluids, enhanced safety preparations and equipment are necessary when using such fluids for wellbore operations. Additionally, many hydrocarbon-based fluids are volatile and/or otherwise unsuitable for use at wellbore temperatures and pressures, while lacking the density sufficient to carry many types of proppant. As such, it is common practice to use chemical additives (e.g., gelling agents, viscosifiers, etc.) to alter the characteristics of the fluids. An example a system describing use of liquid petroleum gas is described in U.S. Patent 8,408,289, which is incorporated by reference herein in its entirety. Use of chemical additives generates waste and disposal issues similar to those encountered when performing fracturing operations using aqueous fluids.

Independent of the type of fracturing fluid and proppant used, a fracturing operation typically requires use of one or more high pressure pumps to pressurize the fracturing fluid that is pumped into a wellbore, as well as to transport fluid and/or proppant toward the wellbore. The passage of proppant through a pump can damage the pump, especially in the absence of a significant quantity of liquid in the slurry. Great care must often be taken when controlling the proportions of fluid and proppant used to create a slurry to ensure the formation of a mixture that is non-damaging to pumps and other system components, compatible with the formation, is suitable for use within the wellbore (e.g., appropriate specific gravity, stability at wellbore temperatures and pressures, etc.), and to ensure that the proppant is properly placed in the wellbore fractures.

Additionally, pumps and other such equipment are conventionally driven/powered using diesel engines, which can be responsible for significant quantities of noise, emissions, maintenance, and expense at a worksite, and which require the handling of volatile fluids to fuel and operate. Electric drive systems have been contemplated as an alternative to diesel engines; however, such systems require numerous pieces of equipment, extensive cabling and/or similar conduits, and typically utilize on-site power generation, such as a natural gas turbine. Use of turbine prime movers and similar equipment may be unsuitable when utilizing fracturing fluids that include flammable components. An exemplary electrically powered system for use in fracturing underground formations is described in published United States Patent Application 2012/0255734, which is incorporated by reference herein in its entirety.

A need exists for systems and methods for fracturing and/or stimulating a subterranean formation that can overcome issues of formation damage/compatibility, flammability, proppant delivery, and/or power supply.

### SUMMARY

Embodiments usable within the scope of the present disclosure include systems and methods usable for stimulating a formation (e.g., by forming fractures therein), by providing a first medium to the formation via a first supply subsystem, and a pressure subsystem comprising a pump usable to pressurize the first medium to a pressure sufficient to stimulate the formation. The term "first medium" is used herein to refer, generally, to any type of solid, liquid, or gas able to be flowed, e.g., through a conduit, from a source toward a formation, such through use of one or more pumps or other sources of motive force to move the medium and/or pressurize the medium for performance of a fracturing operation.

For example, in an embodiment, the first medium can include a liquid alkane, and in more specific embodiments, a non-gelled liquid alkane. The term "non-gelled" is used, herein to refer to a medium lacking conventional gellants and/or gelling agents. While in various embodiments, a non-gelled liquid alkane can be used in a chemical-free (e.g., pure) form, it should be understood that if desired, surfactants and/or other types of viscosity modification can be used to modify the first medium without departing from the scope of the present disclosure. In further embodiments, the non-gelled liquid alkane can include an alkane having from one to six carbon atoms (e.g., propane and/or a mixture of other low molecular weight alkanes).

In an embodiment, the first medium can include a halogenated hydrocarbon. While alkanes and other hydrocarbons can generate various concerns and/or difficulties due to their flammability, halogenated hydrocarbons are significantly less flammable or in many cases, non-flammable. Exemplary halogenated hydrocarbons usable within the scope of the present disclosure can include, without limitation, 1,1,1,3,3,3 hexafluoropropane; 1,1,1,2,3,3,3 heptafluoropropane; 1-methoxyheptafluoro propane; 2,3,3,3-tetraflurorpropene; 1,3,3,3-tetrafluoropropene; 1,1,1,2,2,3,4,5,5,5-decafluoro-3-methoxy-4-trifluoromethyl-pentane; 1,1,1,4,4,4-hexafluoro-2-butene- 1-methoxy; 1,1,1,2-tetrafluoroethane; or combinations thereof. In various embodiments, the first medium can include a halogenated alkene, a halogenated ether, a halogenated olefin, or combinations thereof. The halogenated hydrocarbon can constitute all or a portion of the first medium. For example, the first medium can include a non-halogenated hydrocarbon mixed with the halogenated hydrocarbon (e.g., typically 5% or less of the non-halogenated hydrocarbon by volume, though other concentrations can be used without departing from the scope of the present disclosure), such that although the first medium contains flammable components, the halogenated hydrocarbon reduces the overall flammability of the first medium.

In an embodiment, the first medium can include a foamed hydrocarbon (e.g., an alkane or another type of hydrocarbon, including, without limitation, liquefied natural gas, diesel and/or any other hydrocarbon-based fluid). A foamed hydrocarbon can include any type of hydrocarbon usable, e.g., as a fracturing fluid, mixed with a quantity of inert gas sufficient to "foam" the hydrocarbon (e.g., from 45% to 90% inert gas by volume). In an embodiment, the hydrocarbon can be mixed with a fluorosurfactant to promote foaming of the first medium.

In an embodiment, the first medium can include propylene carbonate, e.g., as a more dense and/or environmentally friendly alternative to many other hydrocarbon-based fluids. One or more water-soluble polymers, such as hydroxylpropyl cellulse ether or a similar non-ionic cellulose either, can be used to alter the viscosity and/or other characteristics of the propylene carbonate. In further embodiments, gas (e.g., nitrogen and/or carbon dioxide) can be mixed with the propylene carbonate to affect the density thereof. For example, sufficient gas can be provided to energize the first medium (e.g., up to 45% gas by volume), to foam the first medium (e.g., 45% to 90% gas by volume), or to mist the first medium (e.g., greater than 90% gas by volume).

In other embodiments, the first medium may not include a "fluid" in the conventional sense. For example, embodiments usable within the scope of the present disclosure can include use of a fluidized solid proppant, e.g., a solid material adapted to follow, substantially free of liquid, in the manner of a liquid when flowed at a threshold pressure and/or velocity, while behaving in the manner of a solid at pressures and/or velocities less than the threshold. In an exemplary embodiment, solid particulate matter, such as sand, ceramic, glass, clay, gravel, and/or other similar solid particles, can be mixed with a friction-reducing additive, such that the particles of solid matter can flow relative to one another. Without limitation, usable friction-reducing additives could include molybdenum disulfide, carbon black, graphite, fumed silica, epoxy matrix resin nanoparticles, glass bubbles, or combinations thereof. For example, the friction-reducing additive can coat and/or otherwise be interspersed between particles of solid matter, such that the solid matter can pass and/or flow relative to one another with reduced friction, e.g., behaving in a manner similar to a liquid once sufficient pressure and/or velocity is imparted thereto.

In an embodiment, a fluidized solid proppant could include a material capable of flowing in the manner of a liquid at a threshold pressure and/or velocity in the absence of an additive (such as a friction-reducing component). For example, glass bubbles and/or microspheres could be used as a fluidized solid proppant independent of or in addition to a friction-reducing additive. Alternatively or additionally, one or more solid components adapted to flow in the manner of a liquid when vibrated or pulsed could be used; for example, sand and/or similar particulate matter can be flowed toward a formation if vibrated and/or pulsed at a suitable frequency. In an embodiment, a pneumatic conveying system can be used to vibrate and/or pulse the particulate matter to facilitate movement thereof.

To facilitate intermixing of components of a fluidized solid proppant and/or a reduction in friction thereof, in various embodiments a quantity of liquid (e.g., a lubricant, a fracturing fluid, etc.) can be mixed with the fluidized solid proppant; however, a quantity insufficient to form a slurry with the proppant can be used due to the fact that the proppant, itself, can be flowed toward the formation without slurrying the proppant.

In an embodiment, the first medium can include a liquid material adapted to solidify at a threshold temperature (e.g., a foam material), such that the medium can be flowed into the formation as a liquid, then solidified (e.g., into a porous, solid material) after reaching fractures in the formation, enabling the solidified material to function as proppant. Depending on the ambient wellbore conditions (e.g., temperature), a cooling fluid could be injected to prepare the formation to receive the liquid material without premature solidification thereof.

Independent of the particular substance used as the first medium, in an embodiment the supply subsystem used to store and/or flow the first medium toward the formation can include one or more vessels adapted for containment thereof and/or for driving the first medium. For example, a vessel can be supplied with an inert gas (e.g., nitrogen or another similar gas) above and/or otherwise in association with the first medium, such that pressure of the inert gas can be used to drive the first medium from the vessel toward the formation. Alternatively or additionally, a separator (such as a bladder, a piston and/or another similar member) can be positioned in the vessel and used to drive the first medium from the vessel toward the formation, e.g., using a pressurized fluid to move the separator.

Alternatively or additionally, a vertically oriented vessel can be used, such that gravity and/or vapor pressure of the first medium can drive the first medium from the vessel toward the formation. A booster pump associated with the vessel can be used to draw the first medium from therein and feed the first medium to an additional pump (e.g., a pump used to mix the first medium with a proppant, to transport the first medium to high pressure fracturing pumps, and/or to pressurize the first medium). Use of a separate booster pump can prevent the vaporization of volatile components (e.g., low molecular weight alkanes) caused by the intake thereof at one or more of the additional pumps. In an embodiment, the vertically oriented vessel can be adapted for transport in a horizontal orientation (e.g., on a truck, trailer, and/or similar vehicle or mode of transport). In further embodiments, a vessel can include a plurality of outlets, the size and number thereof selected to flow the first medium from the vessel toward the formation at a rate sufficient to perform a desired operation (e.g., a stimulation and/or fracturing operation).

In an embodiment, a pipeline in communication with a remote source can be used to supply the first medium to the formation directly, in addition to or in lieu of one or more on-site storage vessels.

While embodiments usable within the scope of the present disclosure can be utilized for any manner of operation in which the flow of a medium relative to a formation is desired, in various embodiments, the systems and methods described herein can be used for stimulation and/or fracturing operations. In such embodiments, the first medium can include a fracturing fluid (e.g., water, hydrocarbons, and/or any of the fluids and/or media described previously). In combination with the fracturing fluid, a second supply subsystem can be used to provide a second medium that includes a proppant (potentially with lubricants and/or other additives) to the formation.

In an embodiment, the fracturing fluid can include a non-gelled liquid alkane, as described above, and the proppant can include a specific gravity, a size (e.g., a diameter) or combinations thereof adapted to provide the proppant with a substantially neutral or positive buoyancy in the fracturing fluid. As used herein, the term "substantially neutral buoyancy" can include a neutral, positive, or negative buoyancy in which the proppant does not settle at a rate sufficient to prevent use of the fracturing fluid and proppant in a fracturing operation. For example, in one embodiment, the proppant can have a specific gravity of 1.5 or less, and in a further embodiment, the proppant can have a specific gravity of 1.1 or less. Alternatively or additionally, in an embodiment, proppant particles could have a diameter of 105 microns or less to facilitate buoyancy thereof.

In an embodiment, the proppant can include a hollow material, such as glass bubbles, cenospheres, microspheres, and/or other similar materials having a structure sufficient to function as proppant while remaining generally buoyant in a fracturing fluid. In an embodiment, the proppant can include a composite material, such as a syntactic foam. In an embodiment, the proppant can include a porous material, such as an aerogel, a resin-coated aerogel, a resin-coated pumice, a ceramic foam or other type of foamed material, or combinations thereof. As used herein, a "porous material" can include particles having cylindrical and/or tubular structures (e.g., having an axial bore) through which fluid can pass. In a further embodiment, the proppant can include a porous material that is permeable to reservoir fluids, such as a filter material that permits passage of the fluid into and through particles of proppant, while the structure of the material enables the material to function as proppant. In an embodiment, the proppant material can include a crystalline material, such as zircon or other similar crystalline materials.

In an embodiment, a friction-reducing additive, such as those described above, can be combined with proppant particles to facilitate transport of the proppant, e.g., from a vessel or similar source into the fluid path of the fracturing fluid and/or a vessel containing fracturing fluid, such that the proppant can be flowed into communication with the fracturing fluid in the absence of a sufficient quantity of liquid to slurry the proppant.

Independent of the type and/or nature of the proppant used, in an embodiment, the second supply subsystem can include one or move vessels used to store and/or drive the proppant toward the formation. For example, a vertically oriented vessel can be used to enable gravity, the weight of the proppant, or combinations thereof to drive the proppant from the vessel toward the formation. Additionally or alternatively, a positive displacement pump, a centrifugal pump, other similar sources of motive force, can be used to move proppant toward the formation. In an embodiment, a positive displacement pump, for example, could be positioned in a non-horizontal orientation to facilitate intake of proppant (e.g., assisted by gravity).

In an embodiment, an inert gas (e.g., nitrogen or a similar gas) can be provided in the vessel with the proppant, and a pressure thereof can be used to drive the proppant from the vessel toward the formation. Alternatively or additionally, a separator (e.g., a piston, a bladder, and/or another similar device) in the vessel can be moved (e.g., using a pressurized fluid) and used to drive the proppant from the vessel toward the formation. In a further embodiment, a pneumatic conveying system can be used to drive proppant toward the formation (e.g., by pushing proppant within the vessel and/or pulling proppant from the vessel).

In an embodiment, a venturi nozzle can be positioned in communication with a flowpath of the fracturing fluid to reduce a pressure thereof. In doing so, proppant from the second supply subsystem can be drawn into the flowpath of the fracturing fluid. The venturi nozzle can include an elastomeric nozzle adapted to adjust (e.g., self-adjust) to provide a substantially constant pressure drop across the nozzle independent of the flow rate and/or conditions of the fracturing fluid and/or the proppant.

While embodiments usable within the scope of the present disclosure can be powered using on-site using reciprocating engines (e.g., diesel engines), coupled with turbine generators and/or similar power systems, in an embodiment, one or more system components can be configured for use with electrical power. For example, the pressure subsystem can include an electric-powered driver (e.g., an electric motor or similar source of force) in communication with and actuating the pump, while an electrical power source powers the electric-powered driver. In an embodiment, a turbine generator (e.g., a natural gas turbine or similar source) can be used to provide power to an electric motor, which in turn drives the pump. Alternatively or additionally, a grid-based power source can be used to power the electric-powered driver. In an embodiment, an electric-powered driver can be configured for selective and/or simultaneous operation using a grid-based or an on-site power source. Where a grid-based power sourced is used, in an embodiment, one or more additional transformers can be used to convert power from the grid-based power source to a desired voltage. In use, a single pump can be actuated using a single electric-powered driver or multiple electric-powered drivers, and multiple pumps can be actuated using a single electric-powered driver or multiple electric-powered drivers. Similarly, a single power source can power one or multiple electric-powered drivers, or one or multiple electric-powered drivers can be powered by multiple power sources.

A transformer can be used to alter power from the electrical power source from a first voltage to a second voltage suitable for powering the electric-powered driver. In an embodiment, a pump, an electric-powered driver, and a transformer can be positioned on a mobile vehicle. A variable frequency drive can also be included, e.g., on the mobile vehicle, in communication with the transformer and the electric-powered driver. While the above embodiment describes a single pump, electric-powered driver, transformer, and variable frequency drive situated on a mobile vehicle, it should be understood that one or multiple of each type of component described above and/or other components could be included on a vehicle without departing from the scope of the present disclosure. Other configurations of mobile vehicles can also be used without departing from the scope of the present disclosure. For example, in one embodiment a transformer, a variable frequency drive, an electric motor or other type of driver, and a pump can be situated on a single mobile vehicle. In another embodiment, a transformer and variable frequency drive can be positioned on a first mobile vehicle, while one or multiple additional vehicles, each containing one or a plurality of motors and one or a plurality of pumps, can be placed in communication with the variable frequency drive. In another embodiment, a transformer and one or multiple variable frequency drives can be positioned remote from a mobile vehicle (e.g., outside of an operational zone), while conduits can engage each variable frequency drive with one or multiple mobile vehicles, each vehicle containing one or multiple electric-powered drivers and pumps. In an embodiment, the arrangement of components can be selected such that the electrical power source can engage the transformer, and thereby, the electric-powered driver, via a single electrical conduit. In an embodiment, an electrical power source can be engaged with a transformer (and subsequently, to other associated components) via a single electric conduit, eliminating much of the cabling/conduits present at conventional worksites.

While transformers can be used, as needed, to alter the voltage of power received from one or more sources to voltages suitable for use with various system components, in an embodiment, the system components can be adapted for use with low or medium voltages.

In various embodiments, use of air moving devices may be incorporated to control the concentration of vapors (e.g., hydrocarbon-based gasses and/or similar components) proximate to pumps and/or other system components. For example, when using propane as a fracturing fluid, the accumulation of propane proximate to the pump could create a flammable condition (e.g., at a propane concentration of approximately 2.2% to 9.5% in air), while the continuous movement of air proximate to the pump would prevent accumulation of flammable components at a concentration sufficient for ignition. In an embodiment, an electric motor or similar electric-powered driver can include a fan, blower, or other type of air moving device associated therewith, and placement of the driver and/or air moving device can be selected such that the air moving device flows air proximate to the pump for dispersing gas therefrom. In an embodiment, an enclosed conduit can extend between the electric-powered driver and the pump, such that air form the air moving device flows from the driver to the pump via the conduit. Alternatively or additionally, an electric powered driver and pump can be enclosed within a single housing, such that air from the air moving device flows proximate to the pump.

In various embodiments, a drive shaft extending between the electric-powered driver and the pump can have protrusions (e.g., blades, fins, etc.) extending therefrom, such that as the air moving device flows air into contact with the protrusions, motive force is provided to the drive shaft. Alternatively, movement of the drive shaft can, itself, be used to flow air (e.g., via the protrusions) to circulate air proximate to the pump, in addition to or in lieu of an air-moving device associated with the electric-powered driver.

### BRIEF DESCRIPTION OF THE DRAWINGS

In the detailed description of various embodiments usable within the scope of the present disclosure, presented below, reference is made to the accompanying drawings, in which:
Figure 1 depicts a diagram of an embodiment of a system usable within the scope of the present disclosure.
Figure 2A depicts a diagrammatic side view of an embodiment of a motor engaged with a pump, usable within the scope of the present disclosure.
Figure 2B depicts a diagrammatic side view of an embodiment of a motor engaged with a pump, usable within the scope of the present disclosure.
Figure 2C depicts a diagrammatic side view of an embodiment of a motor engaged with a pump, usable within the scope of the present disclosure.
Figure 3 depicts a diagrammatic side view of an embodiment of a motor engaged with a pump, usable within the scope of the present disclosure.
Figure 4 depicts a diagrammatic side view of an embodiment of a motor engaged with a pump, usable within the scope of the present disclosure.
Figure 5 depicts a diagrammatic side view of an embodiment of a variable frequency drive usable within the scope of the present disclosure.
Figure 6A depicts a diagram of an embodiment of a power and pumping subsystem usable within the scope of the present disclosure.
Figure 6B depicts a diagram of an embodiment of a power and pumping subsystem usable within the scope of the present disclosure.
Figure 6C depicts a diagram of an embodiment of a power and pumping subsystem usable within the scope of the present disclosure.
Figure 7 depicts an embodiment of a system usable within the scope of the present disclosure.
Figures 8A through 8D depict diagrams of a wellbore, illustrating an embodiment of a proppant medium usable within the scope of the present disclosure
Figure 9A depicts a diagrammatic embodiment of a proppant medium usable within the scope of the present disclosure.
Figure 9B depicts a diagrammatic embodiment of a proppant medium usable within the scope of the present disclosure.
One or more embodiments are described below with reference to the listed Figures.

### DETAILED DESCRIPTION OF THE EMBODIMENTS

Before describing selected embodiments of the present invention in detail, it is to be understood that the present invention is not limited to the particular embodiments described herein. The disclosure and description herein is illustrative and explanatory of one or more presently preferred embodiments of the invention and variations thereof, and it will be appreciated by those skilled in the art that various changes in the design, organization, order of operation, means of operation, equipment structures and location, methodology, and use of mechanical equivalents may be made without departing from the spirit of the invention.

As well, it should be understood the drawings are intended illustrate and plainly disclose presently preferred embodiments of the invention to one of skill in the art, but are not intended to be manufacturing level drawings or renditions of final products and may include simplified conceptual views as desired for easier and quicker understanding or explanation of the invention. As well, the relative size and arrangement of the components may differ from that shown and still operate within the spirit of the invention as described throughout the present application.

Moreover, it will be understood that various directions such as "upper", "lower", "bottom", "top", "left", "right", and so forth are made only with respect to explanation in conjunction with the drawings, and that the components may be oriented differently, for instance, during transportation and manufacturing as well as operation. Because many varying and different embodiments may be made within the scope of the inventive concept(s) herein taught, and because many modifications may be made in the embodiments described herein, it is to be understood that the details herein are to be interpreted as illustrative and nonlimiting.

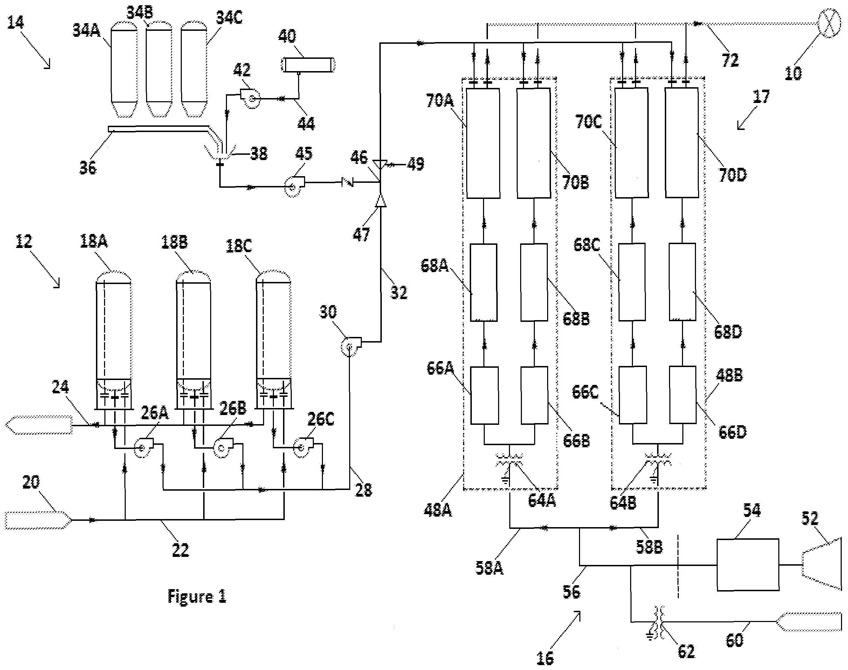

Figure 1 depicts an embodiment of a system usable to inject a fluid under pressure into a well (10). For example, the depicted system can be used to stimulate production (e.g., of hydrocarbons) by forming fractures in the wellbore formation through the provision of a pressurized fracturing fluid into the well (10), mixed with proppant (e.g., solid particulate matter) to maintain and/or support the fractures while permitting the flow of hydrocarbons or other fluids from the formation into the wellbore and toward the surface. Conceptually, Figure 1 subdivides the depicted system into a first subsystem -- a fluid addition subsystem (12) for providing fracturing fluid or a similar medium to the well (10), a second subsystem -- a proppant addition subsystem (14) for providing proppant or a similar medium into the fracturing fluid, a power subsystem (16) for providing power to one or more components of the system, and a pumping subsystem (17) for pressurizing fluid for injection into the well (10). It should be understood that the number, type, and arrangement of components shown in Figure 1 is only one exemplary embodiment, and that the depicted illustration is diagrammatic, intended to conceptually depict one embodiment of the present system. As such, it should be noted that any number, type, and arrangement of identical or similar components could be used without departing from the scope of the present disclosure. Further, while the depicted embodiment includes multiple subsystems (12, 14, 16, 17) used in combination, it should be understood that in various embodiments, the fluid addition subsystem (12) could be used in the absence of the other subsystems (14, 16, 17) and/or in combination with conventional systems and/or components. Similarly, the proppant addition subsystem (14) and the pumping and power subsystems (16, 17) could be used independently or in combination with conventional systems and/or components without departing from the scope of the present disclosure.

The depicted fluid addition subsystem (12) includes a plurality of tanks (18A, 18B, 18C) and/or other types of vessels usable to contain one or more fluid media usable as a fracturing fluid (e.g., to carry proppant to the well (10) and/or to form fractures in the underlying formation when pressurized). While the depicted embodiment includes tanks (18A, 18B, 18C) usable to contain liquid propane, or other low weight alkanes (e.g., having from one to six carbon atoms), it should be understood that various embodiments of the present disclosure can include use of various types of media usable in fracturing operations, as described above.

While gelled liquid petroleum gas has been used in fracturing fluids to minimize damage to formations, driven by pressure applied using inert gas (e.g., nitrogen), as described in U.S. Patent 8,408,289, incorporated by reference above, embodiments usable within the scope of the present disclosure can include use of liquid propane and/or other alkanes, without the addition of gellants or other chemical additives. Additionally, to reduce or eliminate the flammability of the hydrocarbon-based fracturing fluid, in an embodiment, a halogenated hydrocarbon can be present, alone or in combination with non-halogenated hydrocarbons. For example, 1,1,1,2,3,3,3-Heptafluoropropane, or a similar halogenated hydrocarbon compound composed of an aliphatic or aliphatic derivative (e.g., ethers and/or olefins) with one or more halogen elements (e.g., fluorine, bromine, etc.) could be present in the fracturing fluid, such that the resulting fluid is fire retardant or non-flammable. A portion of the fracturing fluid could include a halogenated compound while still providing the fracturing fluid with fire retardant and/or non-flammable properties, though any quantity of halogenated compounds could be used without departing from the scope of the present disclosure. Additionally, it should be understood that heptafluoropropane is referenced as an individual exemplary embodiment; hydrofluoroalkenens, hydrofluoroethers, and other types of halogenated compounds can also be used without departing from the scope of the present disclosure. Of note, use of halongenated hydrocarbons can provide additional beneficial properties beyond non-flammability, due in part to the higher fluid density and viscosity of the halogenated compounds compared to non-halogenated hydrocarbons. Exemplary halogenated hydrocarbons usable within the scope of the present disclosure can include, without limitation: 1,1,1,3,3,3 hexafluoropropane; 1,1,1,2,3,3,3 heptafluoropropane; 1-methoxyheptafluoro propane; 2,3,3,3-tetraflurorpropene; 1,3,3,3-tetrafluoropropene; 1,1,1,2,2,3,4,5,5,5-decafluoro-3-methoxy-4-trifluoromethyl-pentane; 1,1,1,4,4,4-hexafluoro-2-butene; 1 -methoxy-1,1,1,2-tetrafluoroethane; or combinations thereof. Further, any manner of halogenated ether, alkene, and/or olefin, can be used without departing from the scope of the present disclosure.

In other embodiments, the fracturing fluid can include propylene carbonate, e.g., as an "environmentally friendly" fluid, having a density greater than other hydrocarbon fluids (e.g., a specific gravity of approximately 1.2), which can reduce hydrostatic head pressure and surface treating pressure of the fluid, resulting in lower horsepower requirements to pump the fluid. Further, propylene carbonate can be produced with recovered hydrocarbons, eliminating the need for any post-handling, processing, disposal, and/or separation operations to recover the propylene carbonate. The polar nature of propylene carbonate enables water-soluble polymers to be used in lieu of conventional additives and viscosifiers, one such water-soluble polymer including non-ionic cellulose ethers, such as hydroxylpropyl cellulose ether (sold under the trade name Klucel). Use of polymers in this manner can stabilize propylene carbonate when foamed and/or otherwise varied in density. In various embodiments, a gas (e.g., nitrogen or carbon dioxide) can be provided into the propylene carbonate to vary the density thereof. For example, up to 45% gas by volume could be provided to energize the fracturing fluid, from 45% to 90% by volume could be provided to foam the fluid, and from 90% to less than 100% by volume could be provided to mist the fluid, allowing the density of the propylene carbonate to be altered as needed (e.g., depending on formation conditions), reducing the hydrostatic head pressure of the fluid. In various embodiments, propylene carbonate can be mixed with other liquids or gasses, e.g., at the surface or as it is being moved toward the formation, e.g., to change the density and/or viscosity thereof, to enhance proppant transport characteristics (e.g., by foaming, emulsifying, and/or gelling the propylene carbonate), to reduce conduit friction pressure, to help control fluid loss, and to increase fluid efficacy during fracturing operations.

In other embodiments, the fracturing fluid can include a foamed hydrocarbon (e.g., having a quantity of gas mixed therewith). In such embodiments, a hydrocarbon can be stored in the tanks (18A, 18B, 18C), and/or a gas source (not shown) (e.g., a pressurized gas source and pump) can be configured to inject and/or mix gas into the flowpath of fluid from the tanks (18A, 18B, 18C) (e.g., downstream from the tanks), and/or into an intermediate vessel where fluid from the tanks (18A, 18B, 18C) can be mixed with the gas. A fluorosurfactant can be provided in the tanks (18A, 18B, 18C), in the gas, and/or from a separate source to facilitate stabilization of the foamed hydrocarbon.

In other embodiments, the fracturing fluid can include a fluidized solid proppant material, as described above. Fluidized solid proppant can include solid particulate matter (e.g., sand, ceramic, glass, clay, gravel, etc.), mixed with a solid or liquid friction-reducing additive (e.g., molybdenum disulfide, carbon black, graphite, fumed silica, epoxy matrix resin nanoparticles, glass bubbles, and/or silicone lubricants), to enable the solid material to flow in the manner of a liquid under sufficient pressure to impart movement thereto, while behaving in the manner of a solid in the absence of such pressure. As such, a fluidized solid proppant can be flowed, substantially in the absence of liquid (e.g., a quantity of liquid insufficient to form a slurry therewith), into a wellbore for performance of a fracturing operation, then permitted to settle and/or remain within the fractures via a cessation of pressure applied from the surface. In various embodiments, the fluidized solid proppant can include solid material (e.g., sand or similar particulate matter) that can flow in the manner of a liquid when vibrated and/or pulsed (e.g., using a pneumatic conveyance system to pulse air and/or other fluids through the proppant), with or without the addition of a friction-reducing additive.

In various embodiments, fluidized solid proppant can include materials that flow in the manner of a liquid under a threshold pressure in the absence of a friction-reducing additive. For example, "glass bubbles," available from 3M of St. Paul, Minnesota, or similar microspheres or other types of particulate matter having a size, shape, surface feature, and/or other characteristic that reduces or inhibits frictional interactions with adjacent particles.

In an embodiment, the tanks (18A, 18B, 18C) can contain a liquid adapted to solidify under threshold conditions (e.g., temperature), such that the liquid can be flowed into the well (10) until it reaches a fracturing zone, then allowed to solidify within fractures. In an embodiment, binary addition of multiple components could be used. To facilitate use of such a material, the well (10) can be pre-treated using a fluid to at least temporarily cool the formation prior to flowing the liquid into the well (10), such that the material does not solidify prematurely.

In embodiments where a liquid/foamed solidifying material is used, it should be understood that the proppant supply subsystem (14) can be omitted, if desired.

Figure 1 depicts the tanks (18A, 18B, 18C) as generally cylindrical vessels having a vertical orientation. Use of vertically-oriented tanks to contain propane and/or other alkanes (and/or halogenated hydrocarbons) can enable gravity and/or vapor pressure above the contents of the tanks to aid in driving the contents toward the well (10), thus requiring lower energy and/or lower power pumping equipment, while also enabling the tanks to include a smaller quantity of unused volume (e.g., "tank bottoms") when compared to a horizontally-oriented tank. Vertical tanks also provide a smaller footprint than horizontal tanks and other alternatives. However, it should be understood that any type of vessel usable to contain fracturing fluid can be used without departing from the scope of the present disclosure. In an embodiment, the tanks (18A, 18B, 18C) can include multiple outlets to facilitate flowing of fluid therefrom at a rate sufficient to perform fracturing or other operations. In a further embodiment, the tanks (18A, 18B, 18C) can be portable/transportable (e.g. skid-mounted or otherwise structured to facilitate transportability) in a generally horizontal orientation prior to erecting the tanks in a vertical orientation. In other embodiments, use of on-site vessels containing fracturing fluid could be omitted, and pipelines or similar conduits from a remote source could be used to continuously or intermittently supply fracturing fluid to the well (10).

The tanks (18A, 18B, 18C) are shown in communication with a fluid source (20) for supplying a first medium (e.g., propane, alkanes, and/or other types of fracturing fluid) thereto via a fill line (22). A vent line (24) is also usable, e.g., to relieve pressure from the tanks (18A, 18B, 18C) and/or otherwise facilitate flow thereto and therefrom. Each tank (18A, 18B, 18C) is shown in communication with an associated pump (26A, 26B, 26C) (e.g., a booster pump), usable to draw fracturing fluid therefrom and flow the fluid toward the well (10) via a conduit (28). A secondary fluid booster pump (30) is shown for further driving the fluid toward the well (10), through a low pressure region (32) of the conduit. While Figure 1 depicts each tank (18A, 18B, 18C) having a respective associated pump (26A, 26B, 26C) associated therewith, and a secondary booster pump (30) to further drive the fluid, it should be understood that in various embodiments, a secondary pump may be omitted, a single pump could be used to draw fluid from multiple tanks, multiple pumps could be used to draw fluid from a single tank, or use of pumps could be omitted. In an embodiment, gravity, vapor pressure, and/or pressure applied to the tanks (18A, 18B, 18C) and/or the contents thereof using external sources could be used to drive fracturing fluid toward the well (10) in lieu of pumps.

In further embodiments, nitrogen and/or another type of inert gas could be provided in the tanks (18A, 18B, 18C) with the first medium and the pressure thereof could be altered and/or otherwise used to facilitate driving of the fracturing fluid toward the well (10). Alternatively or additionally, a bladder, piston, and/or similar type of separator (not shown) can be provided in the tanks and driven (e.g., using a pressurized fluid, hydraulic and/or pneumatic mechanisms, mechanical force, other similar means, or combinations thereof) to drive the contents of the tanks (18A, 18B, 18C) toward the well (10).

The depicted proppant addition subsystem (14) includes a plurality of proppant storage vessels (34A, 34B, 34C) (e.g., silos or another type of tank and/or container), positioned in association with a conveyor (36), which can include one or more conveyor belts, chutes, slides, pipes, or other types of conduits and/or means of conveyance usable to transport proppant from the vessels (34A, 34B, 34C) toward a hopper (38) or similar type of container. Use of vertically oriented proppant storage vessels, such as silos, can enable gravity and/or the weight of the proppant to drive proppant from the containers toward the conveyor (36) and/or toward the well (10), while also reducing the footprint presented by the containers. One exemplary proppant storage container could include a Model 424 Sand Silo, produced by Loadcraft Industries, LTD of Brady, Texas, which can include an associated transportation trailer. Proppant within the vessels (34A, 34B, 34C) can include any manner of small and/or particulate solid matter usable to retain and/or support fractures in a formation, such as sand, glass or clay beads, gravel, or other similar types of material and or particulate matter, such as crystalline material (e.g., zircon) and/or hollow glass particles (e.g., glass bubbles/microspheres, such as those made by 3M of St. Paul, Minnesota), among other possible alternatives.

Depending on the type of fracturing fluid used the proppant within the vessels (34A, 34B, 34C) can have characteristics selected to facilitate buoyancy and/or transport within the fluid. For example, the proppant can be provided with a specific gravity of less than 1.5 and in an embodiment, less than 1.1, to facilitate transport in propane and/or other non-gelled alkanes, propylene carbonate, and/or other similar types of fracturing fluids. Alternately or additionally, the proppant can be provided with a size sufficiently small to promote transport, such as particles having a diameter of 105 micros or less. In various embodiments, the proppant can include hollow materials (e.g., glass bubbles, cenospheres, and/or microspheres). In various embodiments, the proppant can include a composite material, such as a syntactic foam. In various embodiments, the proppant can include a porous material, such as an aerogel, a resin-coated aerogel, a pumice, a resin-coated pumice, a ceramic foam or other foamed material, and/or a tubular-shaped (e.g., cylindrical) material having an axial bore through which fluid can flow. In various embodiments, the proppant can include a crystalline material, such as zircon.

While Figure 1 depicts three proppant storage vessels (34A, 34B, 34C) in association with a conveyor (36) for transporting the proppant to a hopper (38) or other type of second container, it should be understood that in various embodiments, a single hopper or container could be used, while omitting separate storage containers and a conveyor, or use of a hopper or other type of secondary container could be omitted while proppant is conveyed toward the well (10) directly from storage containers. Generally, the hopper (38) serves as a location where a lubricating fluid from a lubrication source (40) (e.g., a tank) can be provided to dispensed proppant, via a conduit (44) and lubrication pump (42). Usable lubricating fluids can include fracturing fluid identical or similar to that stored in the tanks (18A, 18B, 18C) of the fluid addition subsystem (12), mineral oil, or any other suitable lubricant that is generally non-damaging to system components and compatible with the fracturing fluid in the tanks (18A, 18B, 18C), and the formation and reservoir fluids in the well (10). In an embodiment, usable lubricants can include one or more friction-reducing additives, such as those described above with regard to use of a fluidized solid proppant, for enabling proppant to be flowed from the vessels (34A, 34B, 34C) into the flowstream of the fracturing fluid without requiring formation of a slurry and/or in the absence of a substantial quantity of fluid. Alternatively or additionally, friction-reducing additives could be included within and/or directly added to the vessels (34A, 34B, 34C). In various embodiments, use of a lubricant may be unnecessary, such as when glass bubbles or a similar type of friction-reduced proppant material is used. For example, any of the proppant materials described herein could be mixed with a friction-reducing additive to allow flowing thereof in the substantial absence of liquid.

A proppant pump (45) can be used to drive the proppant and lubricating fluid toward the well (10) and/or to slurry the proppant with the lubricating fluid, if desired and/or necessary. In an embodiment, the proppant pump (45) can include a positive displacement pump and/or a centrifugal pump. In a further embodiment a positive displacement pump can be provided in a non-horizontal orientation to facilitate intake of proppant from a vertically oriented vessel. As depicted in Figure 1, the proppant can be mixed with the flowstream of fracturing fluid from the fracturing fluid addition subsystem (12) at an addition point (46) within the low pressure region (32) of the conduit, such that the flow of the proppant and fracturing fluid can mix and/or slurry the proppant and fluid (e.g., due to turbulent flow and/or other factors) to achieve a desired proppant concentration. Generation of a slurry of proppant and fracturing fluid having a generally constant proppant concentration enables the amount of proppant added at the addition point (46) to be controlled solely by modifying the rate of addition of the proppant slurry. In an embodiment, a logic system can be used to regulate the flow of proppant based on the flow rate of the fracturing fluid.

It should be understood that the depicted proppant addition subsystem (14) is only one exemplary embodiment by which proppant can be added to a stream of fracturing fluid. In an embodiment, a venturi nozzle (47) can be positioned in communication with the flowstream of fracturing fluid, e.g., at or near the addition point (46) (e.g., upstream thereof), thereby increasing the velocity and reducing the pressure of fluid at the downstream end of the nozzle (47), such that the flow of lower-pressure fracturing fluid across and/or proximate to the addition point (46) can draw proppant through into the flowstream. A diffuser (49) can be provided downstream from the nozzle (47). An elastomeric (e.g., self-adjusting) nozzle can be used to facilitate a constant pressure drop across the nozzle, thereby facilitating control of the rate/concentration of proppant. Use of a venturi nozzle can further facilitate mixing and/or slurrying of the proppant and fracturing fluid.

In lieu of or in addition to the methods of flowing the proppant described above, in various embodiments, inert gas can be mixed with the proppant in the vessels (34A, 34B, 34C), the pressure from which can be used to facilitate driving the proppant toward the well (10). Alternatively or additionally, a separator, such as a piston or bladder, similar to that described above with regard to the tanks (18A, 18B, 18C) can be used to facilitate driving the proppant toward the well (10).

As fracturing fluid and/or proppant in the low pressure region (32) flows toward the well (10) it is pressurized by one or more high pressure fracturing pumps (70A, 70B, 70C, 70D), defining a high pressure region (72) of the conduit, such that the fluid provided into the well (10) is at a pressure sufficient to generate fractures in the formation. The depicted power subsystem (16) is usable to provide power to the high pressure pumps (70A, 70B, 70C, 70D), and/or to other system components (such as the pumps (26A, 26B, 26C, 30, 42, 45) usable to flow fracturing fluid, proppant, and/or lubricating fluid, the proppant conveyor (36), one or more valves associated with system components, and/or other similar elements).

Figure 1 illustrates two methods by which the high pressure pumps (70A, 70B, 70C, 70D) and associated components can be powered; however, it should be understood that while the depicted power subsystem (16) includes the simultaneous and/or selective use of two sources of power, in other embodiments, a single source of power could be used. Additionally, while the depicted power subsystem (16) is used to power the high pressure pumps (70A, 70B, 70C, 70D), it should be understood that the power subsystem (16) can be used to power any portion of the depicted system (e.g., the booster pumps associated with the fluid subsystem, the lubrication and slurry pumps associated with the proppant subsystem, proppant conveyors, various associated valves, as well as other fluid systems (not shown) associated with the well (10)). Specifically, the power subsystem (16) is shown having a turbine (52) (e.g., a natural gas turbine or similar type of device usable to produce mechanical output from other forms of energy) coupled with a generator (54), to produce electricity that can be conducted via a cable (56) or similar conduit to other components of the power subsystem (16). Alternatively or additionally, power can be obtained from an external source (e.g., a municipal power grid, power lines, etc.) (60). While typical electrical power is provided having a voltage of 4,160 volts, in an embodiment, high voltage lines could be used to convey electricity to the system. For example, Figure 1 depicts power lines (60) capable of conveying high voltage, e.g., 13,800 volts or more, to a transformer (62), usable to step down the voltage in the conduit (56) to a typical voltage of 4,160 volts or another usable voltage. Power produced using the generator (54) can be provided at a usable voltage without requiring a transformer; however, a transformer could be used in association with the generator (54) without departing from the scope of the present disclosure. Various embodiments usable within the scope of the present disclosure can include medium voltage and/or low voltage components.

While any number and type of high pressure pumps can be used, Figure 1 depicts four high pressure pumps (70A, 70B, 70C, 70D) usable to pressurize the fracturing fluid. The first and second high pressure pumps (70A, 70B) are shown positioned on a first transport vehicle (48A), which can include, by way of example, a flatbed trailer, a truck, a skid, or any other transportable platform or framework. Similarly, the third and fourth high pressure pumps (70C, 70D) are shown positioned on a second transport vehicle (48B).

Each transport vehicle (48A, 48B) is shown having a transformer (64A, 64B) positioned thereon. Use of a transformer on the vehicle, itself, enables a single respective power cable (58A, 58B) to be extended from the power source to the vehicle (48A, 48B). Conversely, use of a transformer remote from other system components would require numerous cables and/or other conduits extending from the transformer to other system components. As such, positioning of the transformers (64A, 64B) proximate to the high pressure pumps (70A, 70B, 70C, 70D) and other associated components minimizes the distance across which large numbers of cables/conduits must extend. While usable voltages can vary without departing from the scope of the present disclosure, in an embodiment, the transformers (64A, 64B) can be adapted to reduce voltage in the cables (58A, 58B) from 4,160 volts to 600 volts, for use by components associated with the high pressure pumps (70A, 70B, 70C, 70D). Specifically, Figure 1 depicts two variable frequency drives (66A, 66B) in electrical communication with the first transformer (64A), and two variable frequency drives (66C, 66D) in electrical communication with the second transformer (64B). The variable frequency drives (66A, 66B, 66C, 66D) each, in turn, actuate a respective associated electrical motor (68A, 68B, 68C, 68D). Each electrical motor (68A, 68B, 68C, 68D) in turn powers a respective high pressure pump (70A, 70B, 70C, 70D). In an embodiment, the electrical motors can include explosion-proof motors, such as ATEX motors, available from TEC Motors of Worcestershire, United Kingdom, among other sources.

To reduce electrical noise/interference, such as when using a grid-based power source, the transformers (64A, 64B) can be adapted to convert the received power to a larger number of successive electrical phases/pulses. For example a transformer could receive and convert a three-phase source of power to a nine-phase, eighteen-pulse source of power for transmission to successive system components.

As such, the depicted power subsystem (16) is usable to reduce or eliminate conventional use of diesel engines to power high pressure fracturing pumps. Additionally, use of modular sets of components positioned on mobile trailers or similar transportable vehicles (48A, 48B) minimizes the number and length of cables and other conduits required to power each component, while also facilitating installation of each component. For example, all connections between the transformers (64A, 64B), variable frequency drives (66A, 66B, 66C, 66D), motors (68A, 68B, 68C, 68D), and high pressure pumps (70A, 70B, 70C, 70D) can generally be permanently installed, such that the vehicles (48A, 48B) can be positioned at a desired location at an operational site, then engaged with a single cable (58A, 58B), thereby powering each of the components. Further, use of modular, movable sets of components reduces the footprint of the system while enabling flexible positioning of components, as needed, depending on the position of other objects at an operational site. In an embodiment, power generation components can be placed remote from other system components, such as the fracturing fluid addition subsystem (12), which reduces risk of ignition when flammable components (e.g., propane) are used in the fracturing fluid.

While Figure 1 depicts two transportable vehicles (48A, 48B), each having one transformer, two variable frequency drives, two electrical motors, and two high pressure pumps thereon, it should be understood that any number of transportable vehicles can be used, and further, each transportable vehicle could include a single high pressure pump or three or more high pressure pumps without departing from the scope of the present disclosure. Additionally, while Figure 1 depicts a single transformer used in conjunction with two variable frequency drives, two motors, and two high pressure pumps, any number of transformers could be used, or in an embodiment, a suitable voltage could be provided to the components of the power subsystem (16) directly, obviating the need for transformers on the transportable vehicles. Further, while Figure 1 depicts a single variable frequency drive used to actuate a single electrical motor, which in turn powers a single high pressure pump, in various embodiments, a variable frequency drive could actuate multiple motors, multiple variable frequency drives could be used to actuate a single motor, a single motor could power multiple high pressure pumps, and/or multiple motors could power a single high pressure pump.

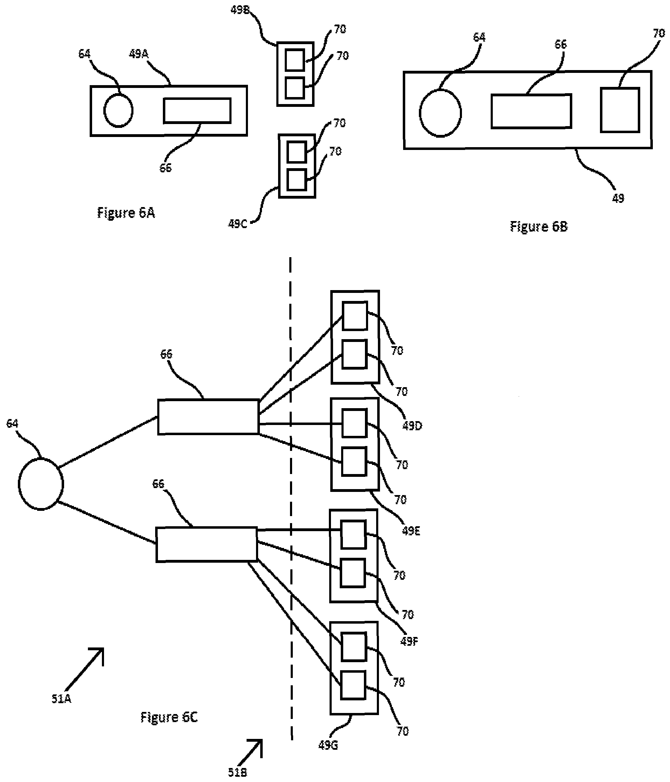

For example, Figures 6A through 6C depict exemplary embodiments of pumping and power subsystems usable within the scope of the present disclosure. Figure 6A depicts a transformer (64) and a variable frequency drive (66) positioned on a first mobile vehicle (49A), two pumps (70) with associated motors (not shown) positioned on a second mobile vehicle (49B), and two pumps (70) with associated motors (not shown) positioned on a third mobile vehicle (49C). The depicted configuration can utilize a plurality of vehicles (49A, 49B, 49C) to reduce the amount of weight carried by a single vehicle, and is usable for low and/or medium voltage applications (e.g. 600 volts). Figure 6B depicts a configuration in which a transformer (64), variable frequency drive (66), and a pump (70) with an associated motor (not shown) are positioned on a single mobile vehicle (49), which can also be used in low and/or medium voltage applications.

Figure 6C depicts an embodiment in which an operational site has been conceptually divided into a "hazard zone" (51B), where potentially dangerous operations can be performed and/or volatile components may accumulate, and a "remote zone" (51A) that is separated and/or spaced from the hazard zone (51B). A transformer (64) and two variable frequency drives (66) are shown positioned in the remote zone (51A), while a plurality of mobile vehicles (49D, 49E, 49F, 49G), each having two pumps (70) with associated motors (not shown) are depicted in communication with the variable frequency drives (66) and positioned in the hazard zone (51B). In addition to maintaining a separation between the transformer (64) and variable frequency drives (66) and the hazard zone (51B), the depicted embodiment can be used in high voltage applications (e.g.,. 4170 volts).

Returning to Figure 1, positioning components of the power subsystem (16) in close proximity to one another, e.g., on transportable vehicles (48A, 48B) can enable other synergistic benefits to be obtained. For example, in an embodiment, air from one or more blowers used to cool the electric motors (68A, 68B, 68C, 68D) and/or maintain positive pressure therein could be channeled to the adjacent high pressure pumps (70A, 70B, 70C, 70D), e.g., by positioning each motor and associated high pressure pump in a single housing and/or connecting the housing of each motor to that of each associated pump via an air conduit. Air from the blowers could thereby dissipate/disperse any propane or other alkanes and/or other flammable materials proximate to the pumps during operation, thereby preventing accumulation of flammable materials in a concentration that could be ignited. In one embodiment, the coupling and/or shaft connecting the motors to respective high pressure pumps could be provided with fins, blades, and/or other similar protrusions, such that rotation of the shaft can circulate air proximate to the high pressure pumps, and/or blower air from the motors can facilitate rotation of the shaft via the fins/protrusions by adding rotational motive force thereto.

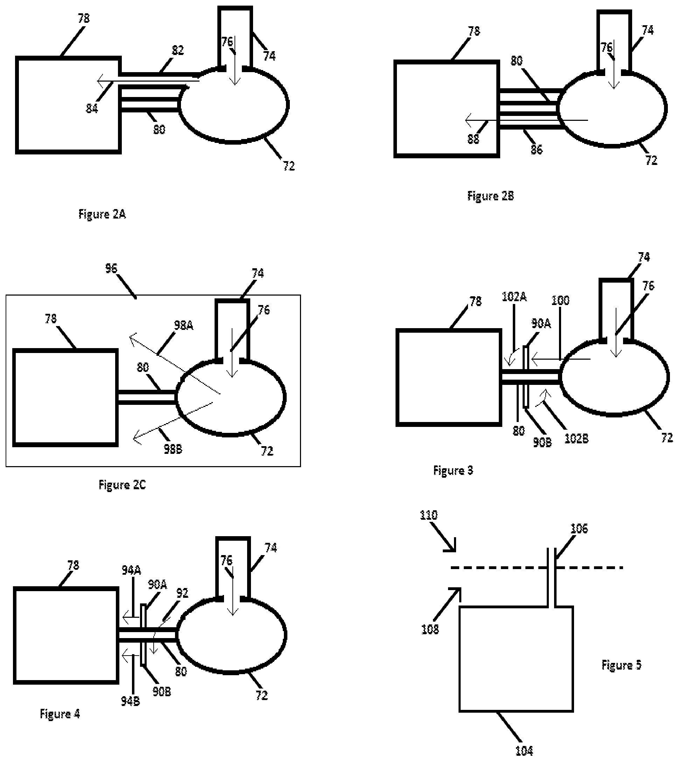

For example, Figure 2A depicts an embodiment of an electric-powered motor (72) having a blower (74) associated therewith, typically usable to provide air to the operative and/or moving parts of the motor (72), e.g., to cool the motor (72), represented by the air flowpath (76). A drive shaft (80) of the motor (72) is shown extending therefrom to engage an adjacent pump (78) (e.g., a high pressure pump usable in fracturing operations). Rotation and/or other types of movement of the drive shaft (80) as the motor (72) is powered can thereby actuate the pump (78). An air conduit (82) is shown extending between the motor (72) and the pump (78), such that air from the blower (76) can flow through the conduit (82) to the pump (72), as indicated by the flowpath (84), e.g., for dissipating gas proximate thereto.

Figure 2B depicts an alternate embodiment in which the motor (72), blower (74), pump (78), and drive shaft (80) are shown. In the depicted embodiment, an air conduit (86) is circumferentially disposed around the drive shaft (80), such that air from the blower (74) that moves across the motor (72), as indicated by the flowpath (86), can pass through the conduit (86), as indicated by the flowpath (88), e.g., to dissipate gas proximate to the pump (78).

Figure 2C depicts an alternate embodiment in which the which the motor (72), blower (74), pump (78), and drive shaft (80) are shown, contained within a single housing (96). Air from the blower (74) that passes across the motor (72), as indicated by the flowpath (76), can therereby also flow proximate to the pump (78), as indicated by flowpaths (86A, 98B).

It should be understood that while Figures 2A through 2C depict three possible methods by which air from a blower associated with a motor can be circulated in proximity to a pump, any method for conveying air to the pump can be used without departing from the scope of the present disclosure, and any of the features depicted in Figures 2A through 2C are usable singularly or in combination.

Figure 3 depicts an embodiment in which the motor (72), blower (74), pump (78), and drive shaft (80) are shown, in which the drive shaft (80) includes multiple protrusions (90A, 90B) (e.g., fins, blades, etc.) extending therefrom. Air from the blower (74) can be provided, e.g., to cool the motor (72), as indicated by flowpath (76). The air can then flow, as indicated by flowpath (100), to contact one or more protrusions (90A, 90B), thereby imparting motive force thereto, and subsequently, to the drive shaft (80), such that the flow of air can cause additional rotation of the drive shaft (80), as indicated by the arrows (102A, 102B). While only two protrusions (90A, 90B) are shown in Figure 3, any number and placement/configuration of protrusions can be used without departing from the scope of the present disclosure. Further, it should be understood that protrusions extending from the drive shaft can be used singularly or in combination with any of the features shown in Figures 2A through 2C.

Figure 4 depicts an embodiment in which the protrusions (90A, 90B) are themselves usable as an air-moving device. The motor (72), blower (74), pump (78), and drive shaft (80) are shown, in which the drive shaft (80) includes multiple protrusions (90A, 90B) extending therefrom. Movement of the drive shaft (80), e.g., imparted by the motor (72), as indicated by arrow (92), can thereby cause rotation of the protrusions (90A, 90B), which can be configured and/or oriented to circulate air proximate to the pump (78), as indicated by the flowpaths (94A, 94B).

Figure 5 depicts a diagrammatic side view of an embodiment of a variable frequency drive (104) usable within the scope of the present disclosure. It should be understood that while a variable frequency drive is depicted and described herein, the concept illustrated in Figure 5 is usable with any element of the system depicted in Figure 1. Specifically, during operations, it is possible for air at or proximate to the variable frequency drive (104) and/or other system components to become contaminated (e.g., with volatile gasses when using propane or similar components as a fracturing fluid, or with other fluids/gasses depending on the operations being performed). A region of contaminated air (108) is shown proximate to the top of the variable frequency drive (104), while generally clean air (111) (e.g., lacking contaminants heavier than air) is shown above the contaminated air (108). During use, it may be necessary for the variable frequency drive (104) to intake air (e.g., for cooling and/or for operation thereof), while the intake of propane, volatile components, and/or other contaminants would be undesirable. Figure 5 depicts an air conduit (106) (e.g., a "snorkel") extending from and/or otherwise engaged with the variable frequency drive (104) for communicating clean air (111) into the variable frequency drive (104), while isolating the variable frequency drive (104) from contaminated air.

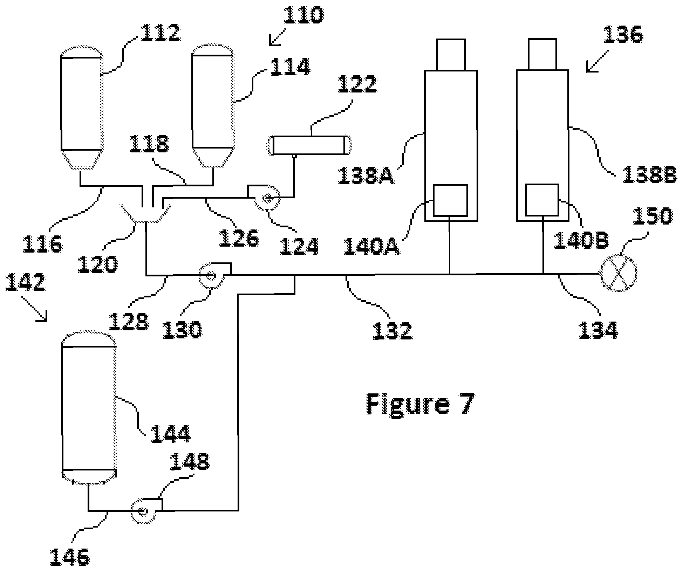

Figure 7 depicts an embodiment of a system usable within the scope of the present disclosure. Specifically, Figure 7 depicts a system usable to inject a fluid under pressure into a well (150), e.g., to stimulate production of hydrocarbons or other products by forming fractures in the wellbore formation. While conventional fracturing operations provide a pressurized fracturing fluid into a well, mixed with proppant (e.g., solid particulate matter) to maintain and/or support the fractures while permitting the flow of hydrocarbons or other fluids from the formation into the wellbore and toward the surface, the depicted embodiment is usable to flow a fluidized solid proppant, substantially free of liquid.

Conceptually, Figure 7 divides the depicted system into a proppant addition subsystem (110) for providing proppant into the well (150), a pumping subsystem (136) for pressurizing proppant and/or other flowstreams for injection into the well (150), and a fluid subsystem (142), which can be used to provide fluid into the well (150), e.g., to form fractures in the formation prior to the flowing of proppant thereto and/or to displace unused proppant from the well (150). It should be understood that the number, type, and arrangement of components shown in Figure 7 is only one exemplary embodiment, and that the depicted illustration is diagrammatic, intended to conceptually depict one embodiment of the present system. As such, it should be noted that any number, type, and arrangement of identical or similar components could be used without departing from the scope of the present disclosure.

The depicted proppant addition subsystem (110) is shown including a proppant storage vessel (112), and an additive storage vessel (114), both of which can include, for example, a silo, tank, hopper, or any other type of container or vessel usable to contain particulate solid matter. Use of vertically oriented proppant storage vessels, such as silos, can enable gravity and/or the weight of the contents within the vessels (112, 114) to drive the contents from the containers, while also reducing the footprint presented by the containers. One exemplary storage container could include a Model 424 Sand Silo, produced by Loadcraft Industries, LTD of Brady, Texas, which can include an associated transportation trailer.

The proppant storage vessel (112) can contain solid particulate matter (e.g., sand, ceramic, glass, clay, gravel, and/or other suitable materials usable as proppant), which can be flowed, pumped, and/or otherwise transferred, e.g., via a conduit (116) to a hopper (120) or other type of container. The conduit (116) can include a conveyor, chute, trough, pipe, or any other suitable means usable to transport solid particulate matter, accompanied by any manner of associated valves, doors, pumps, or other types of control mechanisms usable to regulate the passage of proppant from the proppant storage vessel (112). In an embodiment, the proppant storage vessel (112) could be positioned in direct association with the hopper (120), such that a conduit is not necessary. For example, the proppant storage vessel (112) could be positioned above the hopper (120), such that proppant could fall directly into the hopper (120).

The additive storage vessel (114) can contain a solid, friction-reducing additive, such as molybdenum disulfide, carbon black, graphite, fumed silica, epoxy matrix resin nanoparticles, glass bubbles, and/or any other solid additive or liquid additive (e.g., silicone) capable of forming a friction-reducing coating about one or more particles of proppant and/or occupying spaces between particles of proppant to reduce friction therebetween and facilitate the flow thereof. The contents of the additive storage vessel (114) can be transferred to the hopper (120) via a conduit (118), which can include any manner of conveyor, chute, trough, pipe, or other suitable means, accompanied by associated valves, doors, pumps, or other types of control mechanisms usable to regulate the passage of the additive from the additive storage vessel (114). In an embodiment, the additive storage vessel (114) could be positioned in direct association with the hopper (120), such that the conduit (118) is not necessary.

While Figure 7 depicts a hopper (120), adapted to receive contents from the proppant and additive storage vessels (112, 114), in various embodiments, the hopper (120) could include an auger, a blender, or other types of mixing devices usable to facilitate the combination of the proppant and additive materials (e.g., to coat and/or thoroughly mix the contents of the hopper (120)). A lubricant source (122), depicted as a tank, can be used to dispense a fluid (e.g., mineral oil, water, fracturing fluid, or any other suitable lubricant that is compatible with the proppant and additive materials) into the hopper (120) via a conduit (126) and associated pump (124). As described above, the lubricant can be used, generally, to facilitate mixing of the proppant and additive materials, and/or to facilitate the flow thereof; however, during typical use, the quantity of lubricant dispensed into the hopper (120) can be insufficient to form a slurry with the proppant materials.

It should be understood that while Figure 7 illustrates a separate proppant storage vessel (112) and additive storage vessel (114), that dispense contents to a hopper (120) via separate conduits (116, 118), for mixing thereof, the depicted configuration is exemplary of a single illustrative embodiment. In other embodiments, the vessels (112, 114) could dispense respective contents into a single, merged conduit, where the proppant and additive mix, such that use of a separate hopper within which the proppant and additive can be combined is unnecessary. In still other embodiments, the proppant, any additive materials, and a lubricant, if used, can be prepared off-site, and a single container of fluidized solid proppant can be present, in lieu of the depicted storage vessels (112, 114), hopper (120), and lubricant source (122). In other embodiments, the proppant and additive can be prepared off-site, and dispensed from a single container, facilitated by the lubricant source (122). Similarly, the proppant and lubricant, or additive and lubricant could be mixed off-site, then combined with the remaining components at an operational site.

In other embodiments, a fluidized solid proppant could be used in the absence of a friction-reducing additive. For example, glass bubbles and/or microspheres, such as those made by 3M of St. Paul, Minnesota, could be used as a fluidized solid proppant, in the absence of an additional friction-reducing additive. Use of a hopper (120) could be omitted (e.g., due to the lack of a need to mix components). Alternatively or additionally, an inert gas could be provided in association with the hopper to prevent the introduction of air and/or oxygen into the system.

In still other embodiments, various types of pumps and/or other devices can be used to vibrate and/or pulse system conduits and/or vessels, as needed, to vibrate the fluidized solid proppant to reduce friction between particles thereof, allowing the proppant to flow in the manner of a liquid. For example, in an embodiment, a pneumatic conveying system could be used to project a fluid to pulse and/or vibrate sand or similar particulate matter to facilitate flow thereof.

Independent of the type of fluidized solid proppant used and/or the location and manner of preparation and/or storage thereof, the proppant storage vessel (112) is shown in fluid communication with the well (150). In the depicted embodiment, the hopper (120) is configured to dispense fluidized solid proppant via a conduit (128) (e.g., a pipe or similar member able to transport fluids to the well (150)), assisted by a booster pump (130) (e.g., a positive displacement pump or similar type of pump), to a low pressure region (132) of the conduit. As described above, the term "fluidized solid proppant" is used to describe, in general terms, solid matter (e.g., particulate matter) that flows in the manner of a liquid when transported under certain conditions (e.g., a threshold pressure and/or velocity) while functioning in the manner of a solid when stationary and/or under a pressure less than the threshold pressure. As such, the booster pump (130) and/or other associated equipment, conduits, etc., can be configured to dispense the fluidized solid proppant toward the well (150) under pressure/velocity conditions that enable the proppant to flow in the manner of a liquid, while remaining substantially free of liquid components. As described above, the fluidized solid proppant, while not wholly void of liquid, could be termed "substantially free" of liquid when the quantity of liquid mixed therewith is insufficient to form a slurry with the proppant. As described above, the booster pump (130) and/or other pumps associated with the transport of proppant could be provided in a non-horizontal orientation.

The pumping subsystem (136) is shown in communication with the low pressure region (132). Specifically, two transportable pumping units (138A, 138B) are shown, each having a high pressure fracturing pump (140A, 140B) positioned thereon. While Figure 7 depicts two pumping units (138A, 138B), each having a single pump thereon, it should be understood that the depicted embodiment is an illustrative diagram, and any number and configuration of pumping units, having any number of pumps and/or other equipment associated therewith (e.g., power sources, motors, drivers, etc.) can be used without departing from the scope of the present disclosure. Examples of usable pumping systems are described previously. Further examples of usable pumping systems are described in in published United States Patent Application 2012/0255734, incorporated by reference above. Other usable pumping systems are described in the United States Provisional Application for patent, having the Application Serial Number 61/889,187 filed October 10, 2013, incorporated by reference above.

As the fluidized solid proppant in the low pressure region (132) flows toward the well, it is pressurized by the high pressure fracturing pumps (140A, 140B), defining a high pressure region (134) of the conduit. In an embodiment, the proppant can be provided into the well (150) at a pressure sufficient to generate fractures in the formation. The flow rate provided by the pumps (140A, 140B) can then be reduced, thereby slowing the velocity of the proppant, such that at least a portion of the proppant engages the formation and remains within the fractures, thereby maintaining and/or supporting the fractures.

Depending on the nature of the fluidized solid proppant used, in various embodiments, it may be desirable to use pressurized fracturing fluid (e.g., water, hydrocarbons, etc.) to form fractures in the formation, then displace the fracturing fluid by the provision of fluidized solid proppant into the well (150). As such, Figure 7 depicts a fluid supply subsystem (142) that includes a tank (144) usable to contain one or more fluid media usable as a fracturing fluid (e.g., to form fractures in the wellbore formation when pressurized). For example, the depicted tank (144) could contain water, liquid petroleum gas (e.g., as described in U.S. Patent 8,408,289, incorporated by reference above), propane and/or other alkanes or hydrocarbons, described above and in the United States Provisional Application for patent, having the Application Serial Number 61/889,187 filed October 10, 2013, incorporated by reference above, halogenated hydrocarbons, as described above and in Applications 61/889,187 and 61/807,699, incorporated by reference above, propylene carbonate, as described above and in Application 61/870,350, incorporated by reference above, or any other fracturing fluid known in the art.

While Figure 7 depicts a single tank (144), it should be understood that any number and configuration of vessels and/or pipelines can be used to supply fluid to the well (150) without departing from the scope of the present disclosure. Use of vertically-oriented tanks to contain fracturing fluids (including volatile fluids) can enable gravity and/or vapor pressure above the contents of the tanks to aid in driving the contents toward the well (150), thus requiring lower energy and/or lower power pumping equipment, while also enabling the tanks to include a smaller quantity of unused volume (e.g., "tank bottoms") when compared to a horizontally-oriented tank. Vertical tanks also provide a smaller footprint than horizontal tanks and other alternatives. The depicted tank (144) is configured to dispense fluid, via a conduit (146), assisted by a booster pump (148) toward the low pressure region (132). The high pressure fracturing pumps (140A, 140B) are usable to pressurized the fluid to a pressure sufficient to form fractures in the formation.

In embodiments where fluid from the fluid supply subsystem (142) is used to form fractures in the formation, fluidized solid proppant can be flowed into the well (150), as described above, subsequent to the use of fracturing fluid, thereby displacing the fracturing fluid from the well (50) and engaging proppant with fractures in the formation.

In an embodiment, additional fluid (e.g., fracturing fluid or a displacement fluid from a separate source (not shown)) can be pumped into the well (150) to displace fluidized solid proppant not engaged with the formation.

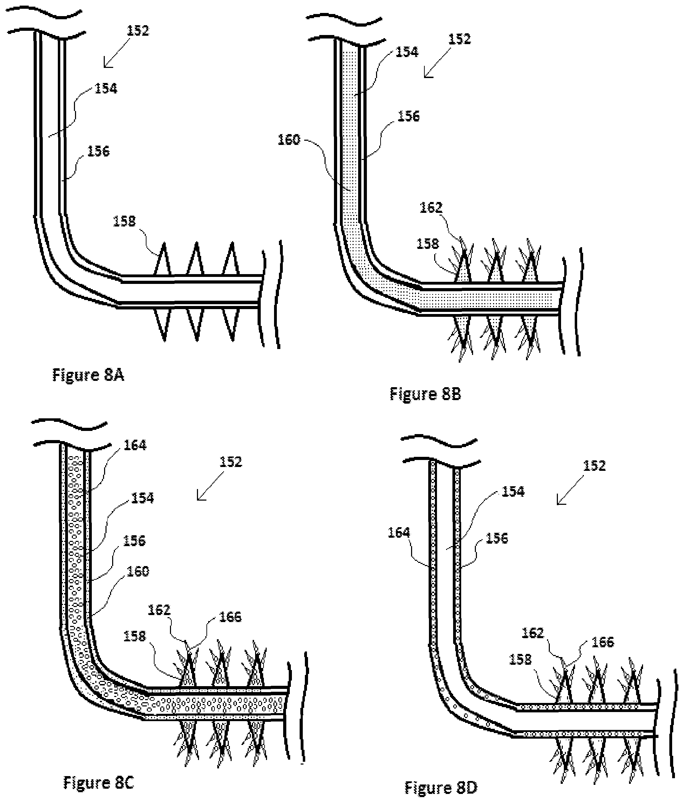

Figures 8A through 8D depict a diagrammatic view of a wellbore (152), illustrating an embodiment of a method usable within the scope of the present disclosure.

Specifically, Figure 8A depicts the wellbore having an internal bore (154) (e.g., of a casing string), an annular region (156) disposed circumferentially about the inner bore (154) (e.g., between the formation wall and the casing string), and a plurality of perforations of which a single perforation (158) is labeled for reference. The internal bore (154), annular region (156), and/or perforations (158) can be filled various wellbore fluids and/or other materials known in the art.

With reference to Figure 8B, when it becomes desirable to perform a fracturing operation on the wellbore (152), e.g., to stimulate production therefrom, a fracturing fluid (160) (e.g., water, hydrocarbons, etc.) can be injected, at high pressure, to the perforations (158). While Figure 8B depicts a fracturing fluid (160) primarily occupying the inner bore (154), it should be understood that during a typical fracturing operation, the generally continuous flow of pressurized fluid can continue such that fracturing fluid occupies the inner bore (154) and perforations (158). The force and/or pressure applied by the fluid (160) to the formation can cause the formation of fractures, of which a single fracture (162) is labeled for reference, at or proximate to the perforations (158).

With reference to Figure 8C, as described previously, a fluidized solid proppant (164) can be flowed to the fractures (162), displacing the fracturing fluid (160). While Figure 8C depicts fluidized solid proppant (164) primarily occupying the inner bore (154), an operation can include the generally continuous flow of fluidized solid proppant, such that the proppant occupies the inner bore (154) perforations (158), and fractures (162). During such an operation, at least a portion of the proppant (166) can enter the fractures (162), such that the release of pressure (e.g., applied from the surface) can cause the fluidized solid proppant (164) to slow and/or settle, such that the portion of the proppant (166) engages the fractures (162) to maintain and/or stabilize the fractures (162) in an open position conducive to production.

With reference to Figure 8D, after the engagement of the depicted proppant (166) within one or more of the fractures (162), it may be desirable to flow a displacement fluid into the well (150) (e.g., through the inner bore 1(54)) to displace the proppant (164),. Alternatively or additionally, the production of fluid from the formation and/or the continued application of pressure from the surface could remove unused proppant from the well (150).

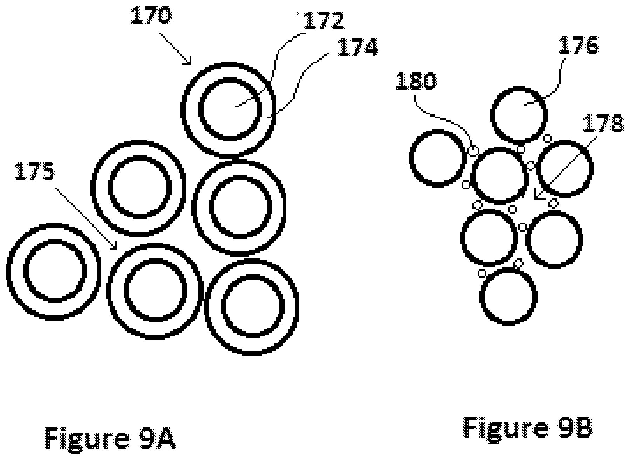

Figure 9A depicts an embodiment of a composition usable within the scope of the present disclosure. Specifically, Figure 9A depicts an embodiment of a fluidized solid proppant material, of which an exemplary particle of proppant (170) has been labeled for reference. The depicted proppant (170) includes a core (172) of solid particulate material that can include, for example, sand, ceramic, clay, gravel, glass, or any other material having sufficient structural strength to maintain and/or support a fracture within a wellbore formation. A coating (174) of a solid, friction-reducing material is shown disposed about the core (172). Usable coatings can include, for example, molybdenum disulfide, carbon black, graphite, fumed silica, and/or epoxy matrix resin nanoparticles, which can be mixed with solid particulate matter (e.g., the core (112)) until the core is substantially coated, as depicted. A liquid coating, such as silicone can also be used. In an embodiment, a lubricant or similar liquid can be provided, e.g., to wet the materials and/or promote mixing thereof; however, it should be noted that the quantity of liquid can generally be insufficient to form a slurry with the proppant (170). Figure 9A depicts spaces (175) and/or interstices between the adjacent particles of proppant (170), which can be occupied by a lubricant or other fluid, as desired. The friction-reducing coating (174) on each particle of proppant (170) enables the proppant (170) to flow in the manner of a liquid when moved under certain threshold conditions (e.g., pressure, velocity, etc.), due to the reduction of friction between adjacent particles, while functioning in the manner of a solid when stationary and/or under a pressure less than the threshold pressure.

Figure 9B depicts an embodiment of a composition usable within the scope of the present disclosure. Specifically, Figure 9B depicts an embodiment of a fluidized solid proppant material that includes particles of proppant (176), which can include, for example, sand, ceramic, clay, gravel, glass, or any other material having sufficient structural strength to maintain and/or support a fracture within a wellbore formation. The proppant (176) can be mixed with particles of a solid, friction-reducing material (180), such as molybdenum disulfide, carbon black, graphite, fumed silica, glass bubbles, and/or epoxy matrix resin nanoparticles, which can occupy the interstices (178) between particles of proppant (176). A lubricant or similar liquid can be provided, e.g., to wet the materials and/or promote mixing thereof (e.g., the liquid could occupy the interstices (178)); however, it should be noted that the quantity of liquid can generally be insufficient to form a slurry with the proppant (176). The presence of the friction-reducing additive (180) between particles of proppant (176) can enable the proppant (176) to flow in the manner of a liquid when moved at a sufficient velocity, due to the reduction of friction between adjacent particles, while functioning in the manner of a solid when stationary and/or moving at a slower velocity.

While Figures 9A and 9B depict mixtures of proppant particles with solid-friction reducing additives, it should be understood that in various embodiments, materials that can flow in the manner of a liquid in the absence of any friction-reducing additives and/or coatings can be used. For example, glass bubbles and/or microspheres can be provided with an external surface having reduced frictional interactions with adjacent particles. In other embodiments, vibration and/or pulsing of proppant materials can be used to reduce friction between particles thereof to enable the proppant materials to flow, e.g., in the substantial absence of liquid.

While various embodiments usable within the scope of the present disclosure have been described with emphasis, it should be understood that within the scope of the appended claims, the present invention can be practiced other than as specifically described herein. The following are the claims of the parent application as filed and are included as part of the description of this divisional application.
1. A system for stimulating a formation, the system comprising:
   a first supply subsystem adapted to provide a first medium to the formation; and
   a pressure subsystem comprising a pump in communication with the first medium for pressurizing the first medium to a pressure sufficient to stimulate the formation.
2. The system of claim 1, wherein the first medium comprises a liquid alkane.
3. The system of claim 2, wherein the first medium comprises a non-gelled liquid alkane.
4. The system of claim 3, wherein the non-gelled liquid alkane comprises from one to six carbon atoms.
5. The system of claim 1, wherein the first medium comprises a halogenated hydrocarbon.
6. The system of claim 5, wherein the halogenated hydrocarbon comprises 1,1,1,3,3,3 hexafluoropropane; 1,1,1,2,3,3,3 heptafluoropropane; 1-methoxyheptafluoro propane; 2,3,3,3-tetrafluororpropene; 1,3,3,3-tetrafluoropropene; 1,1,1,2,2,3,4,5,5,5-decafluoro-3-methoxy-4-trifluoromethyl-pentane; 1,1,1,4,4,4-hexafluoro-2-butene-1-methoxy; 1,1,1,2-tetrafluoroethane; or combinations thereof.
7. The system of claim 5, wherein the halogenated hydrocarbon comprises a halogenated alkene, a halogenated ether, a halongenated olefin, or combinations thereof.
8. The system of claim 5, wherein the first medium further comprises a non-halogenated hydrocarbon, and wherein the halogenated hydrocarbon reduces a flammability of the first medium.
9. The system of claim 1, wherein the first medium comprises a fluidized solid proppant adapted to flow, substantially free of liquid, in the manner of a liquid at a threshold pressure and to function in the manner of a solid at pressures less than the threshold pressure.
10. The system of claim 9, wherein the fluidized solid proppant comprises a mixture of solid particulate matter with a friction-reducing additive.
11. The system of claim 10, wherein the friction-reducing additive comprises molybdenum disulfide, carbon black, graphite, fumed silica, epoxy matrix resin nanoparticles, glass bubbles, or combinations thereof.
12. The system of claim 11, wherein the solid particulate matter comprises sand, ceramic, glass, clay, gravel, or combinations thereof.
13. The system of claim 9, wherein the fluidized solid proppant comprises glass bubbles, microspheres, or combinations thereof.
14. The system of claim 9, wherein the fluidized solid proppant comprises a solid material adapted to flow in the manner of a liquid when vibrated or pulsed.
15. The system of claim 14, further comprising a pneumatic conveying system adapted to vibrate or pulse the solid material.
16. The system of claim 9, wherein the fluidized solid proppant comprises a quantity of liquid insufficient to form a slurry with the fluidized solid proppant.
17. The system of claim 1, wherein the first medium comprises a hydrocarbon and a quantity of an inert gas sufficient to foam the hydrocarbon.
18. The system of claim 17, wherein the first medium further comprises a fluorosurfactant.
19. The system of claim 1, wherein the first medium comprises a liquid material adapted to solidify at a threshold temperature.
20. The system of claim 19, wherein the liquid material comprises a foam material.
21. The system of claim 1, wherein the first supply subsystem comprises a vessel having an inert gas and the first medium therein, wherein a pressure of the inert gas is adapted to drive the first medium from the vessel toward the formation.
22. The system of claim 1, wherein the first supply subsystem comprises a vessel having a separator and the first medium therein, wherein movement of the separator is adapted to drive the first medium from the vessel toward the formation.
23. The system of claim 22, wherein the separator comprises a bladder, a piston, or combinations thereof, and wherein the separator is adapted to be moved using a pressurized fluid.
24. The system of claim 1, wherein the first supply subsystem comprises a vertically oriented vessel adapted to enable gravity, vapor pressure of the first medium, or combinations thereof to drive the first medium from the vertically oriented vessel toward the formation.
25. The system of claim 24, wherein the vertically oriented vessel is adapted for transport in a horizontal orientation.
26. The system of claim 24, further comprising a booster pump associated with the vertically oriented vessel, wherein the booster pump drives the first medium from the vertically oriented vessel toward an additional pump adapted to drive the first medium toward the formation such that the booster pump prevents vaporization of the first medium by the additional pump.
27. The system of claim 1, wherein the first supply subsystem comprises a vessel having a plurality of outlets, wherein the plurality of outlets comprise a quantity of outlets adapted to flow the first medium from the vessel toward the formation at rate sufficient to perform a stimulation operation.
28. The system of claim 1, wherein the first fluid supply system comprises a pipeline in communication with a remote source having the first medium associated therewith, and wherein the pipeline is adapted to flow the first medium from the remote source to the formation.
29. The system of claim 1, wherein the first medium comprises a fracturing fluid, the system further comprising a second supply subsystem adapted to provide a second medium comprising a proppant to the formation.
30. The system of claim 29, wherein the fracturing fluid comprises a non-gelled liquid alkane, and wherein the proppant comprises a size, a specificic gravity, or combinations thereof adapted to provide the proppant with substantially neutral buoyancy or positive buoyancy in the non-gelled liquid alkane.
31. The system of claim 29, wherein the proppant comprises a specific gravity of less than or equal to 1.5.
32. The system of claim 31, wherein the proppant comprises a specific gravity of less than or equal to 1.1.
33. The system of claim 29, wherein the proppant comprises particles having a diameter of less than or equal to 105 microns.
34. The system of claim 29, wherein the proppant comprises a hollow material.
35. The system of claim 34, wherein the hollow material comprises glass bubbles, cenospheres, microspheres, or combinations thereof.
36. The system of claim 29, wherein the proppant comprises a composite material.
37. The system of claim 36, wherein the composite material comprises a syntactic foam.
38. The system of claim 29, wherein the proppant comprises a porous material.
39. The system of claim 38, wherein the porous material comprises an aerogel, a resin-coated pumice, a resin-coated aerogel, a cylinder-shaped material, a ceramic foam, a foamed material, or combinations thereof.
40. The system of claim 29, wherein the proppant comprises crystalline materials.
41. The system of claim 40, wherein the crystalline materials comprise zircon.
42. The system of claim 29, wherein the proppant comprises a mixture of solid particulate matter with a friction-reducing additive, and wherein the friction-reducing additive adapts the proppant to flow, substantially free of liquid, in the manner of a liquid at a threshold pressure and to function in the manner of a solid at pressures less than the threshold pressure.
43. The system of claim 42, wherein the friction-reducing additive comprises molybdenum disulfide, carbon black, graphite, fumed silica, epoxy matrix resin nanoparticles, glass bubbles, or combinations thereof.
44. The system of claim 29, wherein the second supply subsystem comprises a vertically oriented vessel adapted to enable gravity, a weight of the proppant, or combinations thereof, to drive the proppant from the vertically oriented vessel toward the formation.
45. The system of claim 44, wherein the second supply subsystem comprises a positive displacement pump, a centrifugal pump, or combinations thereof, adapted to move proppant toward the formation.
46. The system of claim 45, wherein the positive displacement pump is associated with the vertically oriented vessel in a non-horizontal orientation to facilitate intake of the second medium into the positive displacement pump.
47. The system of claim 29, wherein the second supply subsystem comprises a vessel having an inert gas and the second medium therein, wherein a pressure of the inert gas is adapted to drive the second medium from the vessel toward the formation.
48. The system of claim 29, wherein the second supply subsystem comprises a vessel having a separator and the second medium therein, wherein movement of the separator is adapted to drive the second medium from the vessel toward the formation.
49. The system of claim 48, wherein the separator comprises a bladder, a piston, or combinations thereof, and wherein the separator is adapted to be moved using a pressurized fluid.
50. The system of claim 28, wherein the second supply subsystem comprises a venturi nozzle positioned in communication with a flowpath of the fracturing fluid for reducing a pressure thereof such that proppant from the second supply subsystem is drawn into the flowpath of the fracturing fluid.
51. The system of claim 50, wherein the venturi nozzle comprises an elastomeric nozzle adapted to adjust a size thereof to provide a substantially constant pressure drop across the elastomeric nozzle.
52. A method for stimulating a formation, the method comprising the steps of:
   providing a first medium from a first supply subsystem to the formation; and
   pressurizing the first medium to a pressure sufficient to stimulate the formation using a pressure subsystem comprising a pump in communication with the first medium.
53. The method of claim 52, wherein the step of providing the first medium comprises providing a liquid alkane to the formation.
54. The method of claim 53, wherein the step of providing the liquid alkane comprises providing a non-gelled liquid alkane to the formation.
55. The method of claim 54, wherein the step of providing the non-gelled liquid alkane comprises providing a non-gelled liquid alkane having from one to six carbon atoms to the formation.
56. The method of claim 52, wherein the step of providing the first medium comprises providing a halogenated hydrocarbon to the formation.
57. The method of claim 56, wherein the step of providing the halogenated hydrocarbon comprises providing 1,1,1,3,3,3 hexafluoropropane; 1,1,1,2,3,3,3 heptafluoropropane; 1-methoxyheptafluoro propane; 2,3,3,3-tetraflurorpropene; 1,3,3,3-tetrafluoropropene; 1,1,1,2,2,3,4,5,5,5-decafluoro-3-methoxy-4-trifluoromethyl-pentane; 1,1,1,4,4,4-hexafluoro-2-butene-1-methoxy; 1,1,1,2-tetrafluoroethane; or combinations thereof to the formation.
58. The method of claim 56, wherein the step of providing the halogenated hydrocarbon comprises providing a halogenated alkene, a halogenated ether, a halogenated olefin, or combinations thereof to the formation.
59. The method of claim 56, wherein the step of providing the first medium comprises providing a non-halogenated hydrocarbon mixed with the halogenated hydrocarbon, wherein the halogenated hydrocarbon reduces a flammability of the first medium.
60. The method of claim 52, wherein the step of providing the first medium comprises flowing a fluidized solid proppant toward the formation at a threshold pressure, wherein the fluidized solid proppant is adapted to flow, substantially free of liquid, in the manner of a liquid at the threshold pressure and to function in the manner of a solid at pressures less than the threshold pressure.
61. The method of claim 60, further comprising the step of mixing a solid particulate matter with a friction-reducing additive to form the fluidized solid proppant.
62. The method of claim 61, wherein the step of mixing the solid particulate matter with the friction-reducing additive comprises mixing molybdenum disulfide, carbon black, graphite, fumed silica, epoxy matrix resin nanoparticles, glass bubbles, or combinations thereof with the solid particulate matter.
63. The method of claim 62, wherein the step of mixing the solid particulate matter with the friction-reducing additive comprises mixing sand, ceramic, glass, clay, gravel, or combinations thereof with the friction-reducing additive.
64. The method of claim 60, wherein the step of flowing the fluidized solid proppant comprises flowing glass bubbles, microspheres, or combinations thereof toward the formation.
65. The method of claim 60, wherein the step of flowing the fluidized solid proppant comprises vibrating the fluidized solid proppant, pulsing the fluidized solid proppant, or combinations thereof, and wherein the fluidized solid proppant comprises a solid material adapted to flow in the manner of a liquid when vibrated or pulsed.
66. The method of claim 65, wherein the step of vibrating the fluidized solid proppant, pulsing the fluidized solid proppant, or combinations thereof comprises using a pneumatic conveying system to vibrate or pulse the proppant.
67. The method of claim 60, further comprising the step of mixing the fluidized solid proppant with a quantity of liquid insufficient to form a slurry with the fluidized solid propp ant.
68. The method of claim 52, wherein the step of providing the first medium comprises providing a hydrocarbon mixed with a quantity of inert gas sufficient to foam the hydrocarbon toward the formation.
69. The method of claim 68, wherein the step of providing the first medium further comprises providing a fluorosurfactant mixed with the hydrocarbon.
70. The method of claim 52, wherein the step of providing the first medium comprises providing a liquid material adapted to solidify at a threshold temperature to the formation and subjecting the liquid material to the threshold temperature, the threshold pressure, or combinations thereof to solidify the liquid material within fractures in the formation.
71. The method of claim 70, wherein the step of providing liquid material comprises providing a foam material to the formation.
72. The method of claim 52, wherein the step of providing the first medium comprises applying a pressure to the first medium using an inert gas to drive the first medium from a vessel having the inert gas and the first medium therein toward the formation.
73. The method of claim 52, wherein the step of providing the first medium comprises applying a force to the first medium using a separator to drive the first medium from a vessel having the separator and the first medium therein toward the formation.
74. The method of claim 73, wherein the step of applying the force to the first medium using the separator comprises using a pressurized fluid to move a bladder, a piston, or combinations thereof toward the first medium.
75. The method of claim 52, wherein the step of providing the first medium comprises using gravity, vapor pressure of the first medium, or combinations thereof, to drive the first medium from a vertically oriented vessel toward the formation.
76. The method of claim 75, wherein the step of providing the first medium further comprises using a booster pump to drive the first medium from the vertically oriented vessel toward an additional pump adapted to drive the first medium toward the formation, and wherein the booster pump prevents vaporization of the first medium by the additional pump.
77. The method of claim 75, further comprising the step of transporting, in a horizontal orientation, the vertically oriented vessel to a location associated with the formation.
78. The method of claim 52, wherein the step of providing the first medium comprises flowing the first medium through a quantity of outlets in a vessel adapted to flow the first medium from the vessel toward the formation at rate sufficient to perform a stimulation operation.
79. The method of claim 52, wherein the step of providing the first medium comprises flowing the first medium to the formation using a pipeline in communication with a remote source having the first medium associated therewith.
80. The method of claim 52, wherein the step of providing the first medium comprises providing a fracturing fluid to the formation, the method further comprising the step of providing a second medium comprising a proppant from a second supply subsystem to the formation.
81. The method of claim 80, wherein the step of providing the fracturing fluid comprises providing comprises a non-gelled liquid alkane to the formation, and wherein the step of providing the second medium comprises providing proppant particles having a size, a specific gravity, or combinations thereof adapted to provide the proppant with substantially neutral buoyancy or positive buoyancy in the non-gelled liquid alkane.
82. The method of claim 80, wherein the step of providing the second medium comprises providing proppant particles having a specific gravity of less than or equal to 1.5.
83. The method of claim 82, wherein the step of providing the second medium comprises providing proppant particles having a specific gravity of less than or equal to 1.1.
84. The method of claim 80, wherein the step of providing the second medium comprises providing proppant particles having a diameter of less than or equal to 105 microns.
85. The method of claim 80, wherein the step of providing the second medium comprises providing proppant comprising a hollow material to the formation.
86. The method of claim 85, wherein the step of providing proppant comprising the hollow material comprises providing glass bubbles, cenospheres, microspheres, or combinations thereof to the formation.
87. The method of claim 80, wherein the step of providing the second medium comprises providing proppant comprising a composite material to the formation.
88. The method of claim 87, wherein the step of providing proppant comprising the composite material comprises providing a syntactic foam to the formation.
89. The method of claim 80, wherein the step of providing the second medium comprises providing proppant comprising a porous material to the formation.
90. The method of claim 89, wherein the step of providing proppant comprising the porous material comprises providing an aerogel, a resin-coated pumice, a resin-coated aerogel a cylinder-shaped material, a ceramic foam, a foamed material, or combinations thereof to the formation.
91. The method of claim 80, wherein the step of providing the second medium comprises providing proppant comprising crystalline materials to the formation.
92. The method of claim 91, wherein the step of providing proppant comprising crystalline materials comprises providing zircon to the formation.
93. The method of claim 80, further comprising the step of mixing the proppant with a friction-reducing additive, wherein the friction-reducing additive adapts the proppant to flow, substantially free of liquid, in the manner of a liquid at a threshold pressure and to function in the manner of a solid at pressures less than the threshold pressure.
94. The method of claim 93, wherein the step of mixing the proppant with the friction-reducing additive comprises mixing the proppant with molybdenum disulfide, carbon black, graphite, fumed silica, epoxy matrix resin nanoparticles, glass bubbles, or combinations thereof.
95. The method of claim 80, wherein the step of providing the second medium comprises using gravity, a weight of the proppant, or combinations thereof to drive the proppant from a vertically oriented vessel toward the formation.
96. The method of claim 95, wherein the step of providing the second medium comprises using a positive displacement pump, a centrifugal pump, or combinations thereof to move proppant toward the formation.
97. The method of claim 96, wherein the step of using the positive displacement pump comprises positioning the positive displacement pump in a non-horizontal orientation to facilitate intake of proppant from the vertically oriented vessel.
98. The method of claim 80, wherein the step of providing the second medium comprises applying a pressure to the proppant using an inert gas to drive the proppant from a vessel having the inert gas and the proppant therein toward the formation.
99. The method of claim 80, wherein the step of providing the second medium comprises applying a force to the proppant using a separator to drive proppant from a vessel having the separator and the proppant therein toward the formation.
100. The method of claim 99, wherein the step of applying the force to the proppant using the separator comprises using a pressurized fluid to move a bladder, a piston, or combinations thereof toward the proppant.
101. The method of claim 80, wherein the step of providing the second medium comprises flowing the fracturing fluid through a venturi nozzle to reduce a pressure thereof such that proppant from the second supply subsystem is drawn into a flowpath of the fracturing fluid.
102. The method of claim 101, wherein the step of flowing the fracturing fluid through the venturi nozzle comprises flowing the fracturing fluid through an elastomeric nozzle adapted to adjust a size thereof thereof to provide a substantially constant pressure drop across the elastomeric nozzle.

## Claims

1. A fracturing system for hydraulically stimulating a subterranean formation, the system comprising:
a first supply subsystem (12) adapted to provide a first medium to the formation and comprising a first medium storage vessel (18A-C) retaining a first medium pressurized to a first pressure; and
a pressure subsystem comprising a first pump (26A-C) in communication with the first medium and a first motor; wherein the first motor is configured to drive the first pump to pressurize the first medium to a second pressure sufficient to stimulate the formation, the second pressure higher than the first pressure, and to flow said first medium into the subterranean formation;
a second medium addition subsystem (14) comprising: a carrier medium storage vessel retaining a carrier medium that has a higher viscosity than the first medium, a second motor, a second pump (45), a proppant storage vessel (34A-C), and a proppant addition system configured to enable variance in the amount of a proppant added to the carrier medium per unit of volume of the carrier medium; wherein the carrier medium and the proppant from the proppant storage vessel are configured to mix together to form a second medium, and wherein the second motor is configured to drive the second pump to pressurize the second medium to the second pressure to flow said second medium into the subterranean formation, and
wherein the proppant comprises at least one of the group consisting of: glass spheres, glass bubbles, cenospheres, microspheres, aerogel, resin-coated aerogel, resin-coated pumice, and syntactic foam;
wherein the proppant has a specific gravity of less than or equal to 1.1 relative to the carrier medium:
wherein the first and second motors are each electric motors:
wherein the first and second medium addition subsystems each further comprise a variable frequency drive configured to provide electrical power to the respective electric motors: and
a medium mixing system located between the first and second medium addition subsystems and the pipeline, the medium mixing mechanism configured to enable variance in a flow rate of at least one of the first medium and the second medium to the well;
wherein the first medium comprises a non-gelled liquid alkane.

2. The system of claim 1, wherein the first medium comprises a liquid alkane.

3. The system of claim 1, wherein the non-gelled liquid alkane comprises from one to six carbon atoms.

4. The system of claim 1, wherein the first medium comprises a hydrocarbon and a quantity of an inert gas sufficient to foam the hydrocarbon.

5. The system of claim 4, wherein the first medium further comprises a fluorosurfactant.

6. The system of claim 1, wherein the proppant comprises particles having a diameter of less than or equal to 105 microns.
